# EUROPEAN PATENT SPECIFICATION

(11) **EP 3 415 766 B1**
(45) Date of publication and mention of the grant of the patent: **09.12.2020**
(21) Application number: 16889856.7
(22) Date of filing: 12.02.2016
(51) Int. Cl.: F04D 19/04, F04D 29/10, F04D 29/32, F04D 29/64

(54) **VACUUM PUMP WITH FLEXIBLE COVER AND ROTOR**
VAKUUMPUMPE MIT FLEXIBLER ABDECKUNG UND ROTOR
POMPE À VIDE AVEC COUVERCLE SOUPLE ET ROTOR

(43) Date of publication of application: 19.12.2018
(73) Proprietor: Edwards Japan Limited, Yachiyo-shi, Chiba 276-8523 (JP)
(72) Inventor: KAWANISHI, Shinji, Yachiyo-shi, Chiba 276-8523 (JP); SAKAGUCHI, Yoshiyuki, Yachiyo-shi, Chiba 276-8523 (JP); SAEGUSA, Kengo, Yachiyo-shi, Chiba 276-8523 (JP)
(74) Representative: Norton, Ian Andrew
(86) International application number: PCT/JP2016/054170
(87) International publication number: WO 2017/138154

(56) References cited:
- WO-A1-2014/109280
- CN-A- 103 398 013
- JP-A- 2014 055 574
- JP-B2- 3 792 318
- JP-U- H0 596 995
- US-A- 5 528 618
- US-A- 5 733 104
- US-A1- 2014 271 174
- US-A1- 2014 271 174

## Description

The present invention relates to a vacuum pump that can be used in a pressure range between low vacuum and ultrahigh vacuum, the vacuum pump comprising a flexible cover and a rotor

In the manufacture of semiconductors such as memories and integrated circuits, a high-purity semiconductor substrate (wafer) needs to be subjected to doping and etching in a high-vacuum chamber in order to avoid the impacts of dust and the like in the air, and a vacuum pump such as a combination pump, in which a turbomolecular pump and a thread groove pump are combined, is used for exhausting the process gas.

As this type of a vacuum pump, for example, there has been known a vacuum pump that has a cylindrical casing, a cylindrical stator fixed to the inside of the casing by means of an insert and having a thread groove portion disposed therein, and a rotor that is fastened by bolts to a rotor shaft supported in the stator so as to be rotatable at high speeds. In this vacuum pump, a downward momentum is applied to the process gas by a rotor blade of the rotor, transferring the process gas to the upstream of the thread groove pump. Subsequently, the process gas is compressed by the thread groove pump and then exhausted to the outside.

There exist a large number of steps for causing an action of such corrosive process gas upon a semiconductor wafer, and when the process gas within the chamber is exhausted by the vacuum pump, the process gas often causes corrosion and rust on the surfaces of the bolts fastening the rotor and the rotor shaft to each other, or in some cases physicochemical changes in components of the process gas create particles (fine particles, dust).

Furthermore, there exists a risk that the process gas and the like containing foreign matter such as the rust and particles on the surfaces of the bolts flow back into the chamber as the pressure within the chamber repeatedly drops and rises, resulting in adhesion of the foreign matter to the semiconductor wafer and thereby deteriorating the processing quality of the semiconductor wafer.

In view of preventing the process gas and the like containing foreign matter from flowing back into the chamber, Japanese Patent Application Laid-open No. 2014-55574 discloses a vacuum pump that is provided with a cover inserted or fitted into a recessed portion of the rotor to cover fastening portions of the bolts. Also documents CN 103 398 013 A, US 2014/271174 A1 and JP 3 792318 B2 disclose a vacuum pump with a rotor cover.

However, such a vacuum pump allows the process gas to pass through a small gap between the cover and the rotor that is secured to absorb the dimensional errors of the members in assembling the pump, bringing about a risk that the rust on the surfaces of the bolts and the particles remaining in the recessed portion might flow back into the chamber.

Therefore, there arises a technical problem to be solved in order to prevent invasion of foreign matter, such as rust and particles caused by the process gas, during the process of manufacturing the semiconductor wafer, and an object of the present invention is to solve this problem.

The present invention was contrived in order to achieve the foregoing object, and an invention according to claim 1 provides a vacuum pump having: a casing that has an inlet port and an outlet port; and a rotor that has a recessed portion opened toward the inlet port and is fastened to a rotor shaft by a bolt disposed in the recessed portion, the vacuum pump further having a flexible cover that has an outer peripheral portion supported on an end surface of the rotor that opposes the inlet port, and a central portion caved in the recessed portion of the rotor, the flexible cover covering the recessed portion by elastically deforming into a convex shape toward the recessed portion.

According to this configuration, since the flexible cover covers the recessed portion of the rotor, the bolt for fastening the rotor to the rotor shaft is prevented from being exposed to the process gas, preventing corrosion and rusting of the bolt and consequently preventing foreign matter from flowing back into the chamber.

An invention according to claim 2 provides a vacuum pump, which, in addition to the configuration of the vacuum pump according to claim 1, has a reinforcing cover that is disposed on the flexible cover to support the flexible cover that elastically deforms.

According to this configuration, the flexible cover elastically deforms from a supporting point supported by the reinforcing cover to the outer peripheral portion, reducing the maximum stress acting on the flexible cover. Therefore, not only is it possible to enhance the durability of the flexible cover, but also the backward flow of foreign matter into the chamber can be prevented for a long period of time.

An invention according to claim 3 provides a vacuum pump, which, in addition to the configuration of the vacuum pump according to claim 2, has a configuration in which the reinforcing cover has an outer diameter smaller than an outer diameter of the flexible cover.

According to this configuration, the flexible cover elastically deforms while being supported by an entire surface of the reinforcing cover, reducing the maximum stress acting on the flexible cover. Therefore, not only is it possible to enhance the durability of the flexible cover, but also the backward flow of foreign matter into the chamber can be prevented for a long period of time.

An invention according to claim 4 provides a vacuum pump, which, in addition to the configuration of the vacuum pump according to any one of claims 1 to 3, has a flat cover that is disposed adjacent to the flexible cover on the side opposite to the inlet port across the flexible cover, and that supports the flexible cover.

According to this configuration, the flat cover supports the flexible cover, keeping the central portion of the flexible cover flat. Accordingly, the flexible cover elastically deforms smoothly from the central portion thereof to the outer peripheral portion, reducing the maximum stress acting on the flexible cover. Therefore, the backward flow of foreign matter into the chamber can be prevented for a long period of time.

An invention according to claim 5 provides a vacuum pump, which, in addition to the configuration of the vacuum pump according to claim 1, has a configuration in which the flexible cover has a rigidity lowering portion for locally lowering a rigidity of the flexible cover.

According to this configuration, the flexible cover elastically deforms smoothly in such a manner that the rigidity lowering portion curves, preventing an excessive stress from acting upon the flexible cover. Therefore, not only is it possible to enhance the durability of the flexible cover, but also the backward flow of foreign matter into the chamber can be prevented for a long period of time. Moreover, the rigidity lowering portion is provided to lower the rigidity of the flexible cover, allowing the flexible cover to deform easily. Therefore, adhesion between the outer peripheral portion of the flexible cover and the recessed portion of the rotor can be improved.

An invention according to claim 6 provides a vacuum pump, which, in addition to the configuration of the vacuum pump according to claim 5, has a configuration in which the rigidity lowering portion is formed of a plurality of punched holes that are formed concentrically around the central portion of the flexible cover, and the vacuum pump further has a flat cover that is disposed adjacent to the flexible cover on the side opposite to the inlet port across the flexible cover, and that is inserted into the recessed portion of the rotor.

According to this configuration, the flexible cover elastically deforms smoothly in such a manner that the section provided with the punched holes curves, preventing an excessive stress from acting upon the flexible cover. Therefore, not only is it possible to enhance the durability of the flexible cover, but also the backward flow of foreign matter into the chamber can be prevented for a long period of time.

According to the present invention, since the flexible cover covers the recessed portion of the rotor, the bolt for fastening the rotor to the rotor shaft is prevented from being exposed to the process gas, preventing corrosion and rusting of the bolt and consequently preventing foreign matter from flowing back into the chamber.

FIG. 1 is a cross-sectional view showing a vacuum pump according to a first embodiment of the present invention;
FIG. 2 is an enlarged view showing substantial parts of FIG. 1, where (a) is a plan view in which a flexible cover is viewed from the inlet port side and (b) is an enlarged view showing a recessed portion of a rotor;
FIG. 3 is an assembly drawing of the flexible cover;
FIG. 4 is an enlarged view showing the flexible cover that elastically deforms to close the recessed portion of the rotor;
FIG. 5 is an enlarged view of section I shown in FIG. 2;
FIG. 6 is an enlarged view of section II shown in FIG. 2;
FIG. 7 is a graph showing the relationship between the diameter size of a reinforcing cover and the maximum stress acting on the flexible cover; and
FIG. 8 is a diagram showing a flexible cover used in a vacuum pump according to a second embodiment of the present invention, where (a) is a plan view in which the flexible cover is viewed from the inlet port side and (b) is an enlarged view showing the recessed portion of the rotor.

The present invention was realized by a vacuum pump that has, in order to prevent invasion of foreign matter, such as rust and particles caused by a process gas, during the process of manufacturing a semiconductor wafer, a casing that has an inlet port and an outlet port, a rotor that has a recessed portion opened toward the inlet port and is fastened to a rotor shaft by a bolt disposed in the recessed portion, and a flexible cover that has an outer peripheral portion supported on an end surface of the rotor that opposes the inlet port, and a central portion caved, namely, recessed into the recessed portion of the rotor, the flexible cover covering the recessed portion by elastically deforming into a convex shape toward the recessed portion.

### Embodiments

A vacuum pump 1 according to an embodiment of the present invention is described hereinafter with reference to the drawings. Note that such terms as "upper" and "lower" mean that the inlet port side and the outlet port side along a rotor axial direction correspond to the upper side and the lower side.

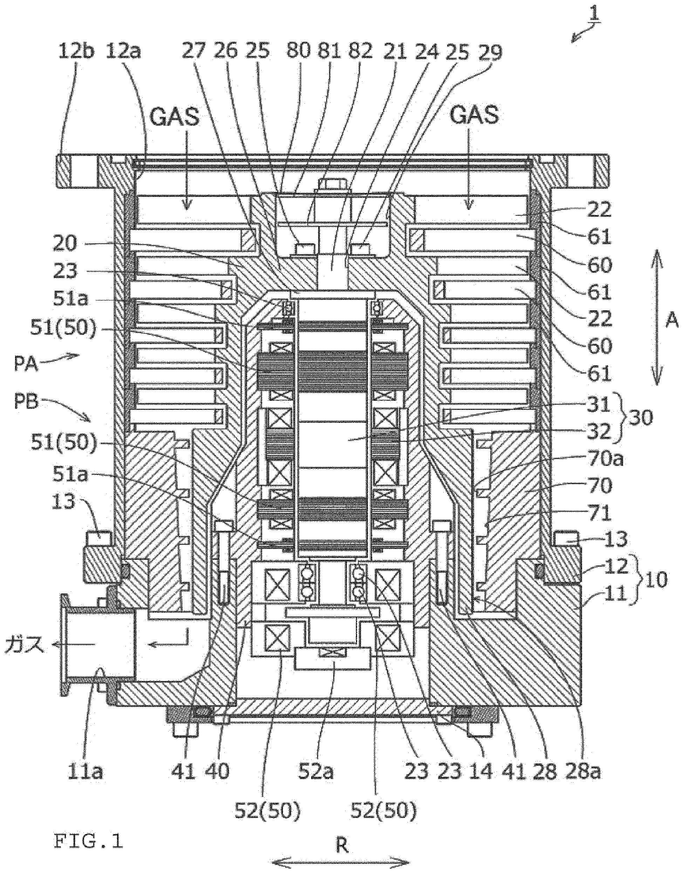

FIG. 1 is a longitudinal sectional view showing the vacuum pump 1. The vacuum pump 1 is a combination pump formed of a turbomolecular pump mechanism PA and a thread groove pump mechanism PB that are housed in a casing 10 having a substantially cylindrical shape.

The vacuum pump 1 has the casing 10, a rotor 20 that has a rotor shaft 21 supported rotatably in the casing 10, a drive motor 30 for rotating the rotor shaft 21, and a stator column 40 for housing a part of the rotor shaft 21 and the drive motor 30.

The casing 10 has a bottomed cylindrical shape. The casing 10 is composed of a base 11 that has a gas outlet port 11a on a side of a lower portion of the casing 10, and a cylindrical portion 12 that has a gas inlet port 12a in an upper portion of the casing 10 and is mounted and fixed onto the base 11 by bolts 13. Note that reference numeral 14 shown in FIG. 1 represents a back lid.

The base 11 is attached in such a manner that the gas outlet port 11a is connected in a communicable manner to an auxiliary pump which is not shown.

The cylindrical portion 12 is attached in such a manner that the gas inlet port 12a is connected in a communicable manner to a vacuum container such as a chamber, not shown, with a flange 12b therebetween.

The rotor 20 has the rotor shaft 21 and rotor blades 22 that are fixed to an upper portion of the rotor shaft 21 and arranged concentrically with respect to the shaft center of the rotor shaft 21.

The rotor shaft 21 is supported in a non-contact manner by a magnetic bearing 50. The magnetic bearing 50 has a radial electromagnet 51 and an axial electromagnet 52. The radial electromagnet 51 and the axial electromagnet 52 are connected to a control unit, not shown.

The control unit controls excitation currents of the radial electromagnet 51 and the axial electromagnet 52 on the basis of detection values obtained by a radial direction displacement sensor 51a and an axial direction displacement sensor 52a, whereby the rotor shaft 21 is supported afloat at a predetermined position.

The upper and lower portions of the rotor shaft 21 are inserted into touchdown bearings 23. In a case where the rotor shaft 21 becomes uncontrollable, the rotor shaft 21, rotating at high speed, comes into contact with the touchdown bearings 23, preventing damage to the vacuum pump 1.

The rotor blades 22 are attached integrally to the rotor shaft 21 by inserting bolts 25 through a rotor flange 26 and screwing the bolts 25 into a shaft flange 27 while having the upper portion of the rotor shaft 21 inserted through a boss hole 24. Hereinafter, the axial direction of the rotor shaft 21 is referred to as "rotor axial direction A," and the radial direction of the rotor shaft 21 is referred to as "rotor radial direction R."

The drive motor 30 is composed of a rotator 31 attached to an outer periphery of the rotor shaft 21 and a stationary part 32 surrounding the rotator 31. The stationary part 32 is connected to the abovementioned control unit, not shown, and rotation of the rotor shaft 21 is controlled by the control unit.

The stator column 40 is placed on the base 11 and has a lower end portion fixed to the base 11 by a bolt 41.

The turbomolecular pump mechanism PA that is disposed in roughly the upper half of the vacuum pump 1 is described next.

The turbomolecular pump mechanism PA is composed of the rotor blades 22 of the rotor 20 and stator blades 60 disposed with gaps with the rotor blades 22. The rotor blades 22 and the stator blades 60 are arranged alternately in multiple stages along the rotor axial direction A. In the present embodiment, five stages of the rotor blades 22 and five stages of the stator blades 60 are arranged.

The rotor blades 22 are inclined at a predetermined angle and formed integrally on an upper outer peripheral surface of the rotor 20. The plurality of the rotor blades 22 are also installed radially around the axis of the rotor 20.

The stator blades 60 are inclined in the opposite direction from the rotor blades 22 and are each sandwiched and positioned, in the rotor axial direction A, by spacers 61 that are installed in a stacked manner on an inner wall surface of the cylindrical portion 12. The plurality of the stator blades 60, too, are installed radially around the axis of the rotor 20.

The lengths of the rotor blades 22 and the stator blades 60 are configured to become gradually short from the upper side toward the lower side in the rotor axial direction A.

In the turbomolecular pump mechanism PA described above, a gas that is drawn through the gas inlet port 12a is transferred from the upper side to the lower side in the rotor axial direction A by rotation of the rotor blades 22.

The thread groove pump mechanism PB that is disposed in roughly the lower half of the vacuum pump 1 is described next.

The thread groove pump mechanism PB has a rotor cylindrical portion 28 provided at a lower portion of the rotor 20 and extending along the rotor axial direction A, and a substantially cylindrical stator 70 surrounds an outer peripheral surface 28a of the rotor cylindrical portion 28.

The stator 70 is placed on the base 11. The stator 70 includes a thread groove portion 71 engraved in an inner peripheral surface 70a.

In the thread groove pump mechanism PB described above, the gas that is transferred from the gas inlet port 12a toward the lower side in the rotor axial direction A is compressed by the drag effect of high-speed rotation of the rotor cylindrical portion 28 and then transferred toward the gas outlet port 11a. Specifically, after being transferred to a gap between the rotor cylindrical portion 28 and the stator 70, the gas is compressed on the inside of the thread groove portion 71 and transferred to the gas outlet port 11a.

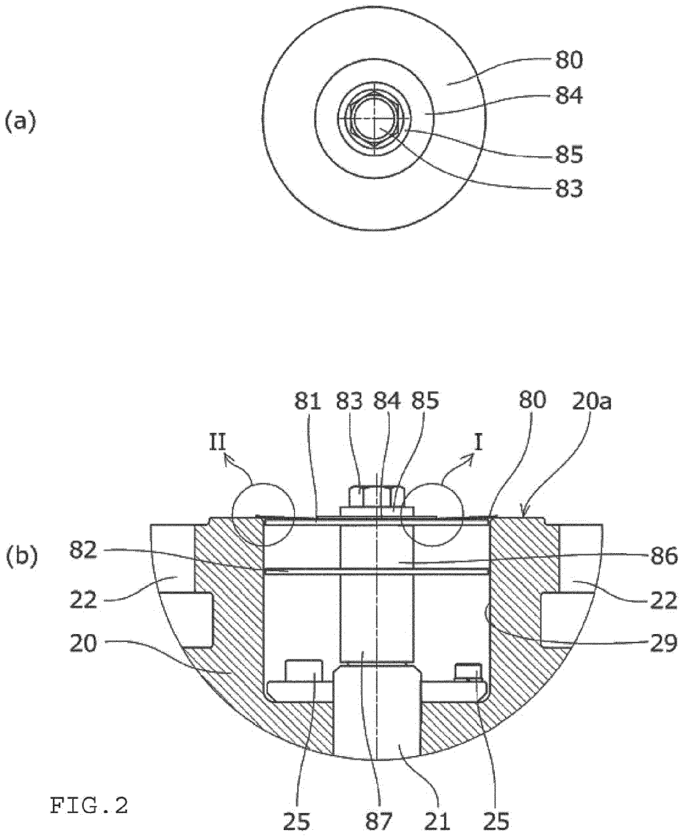

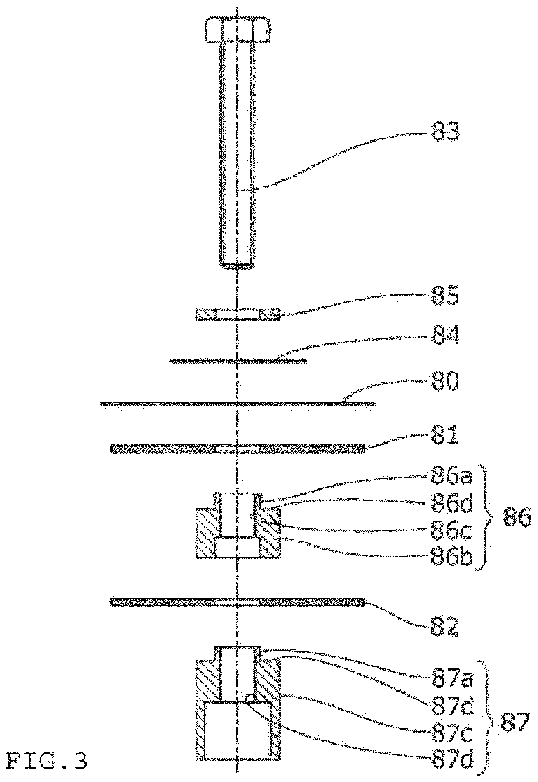

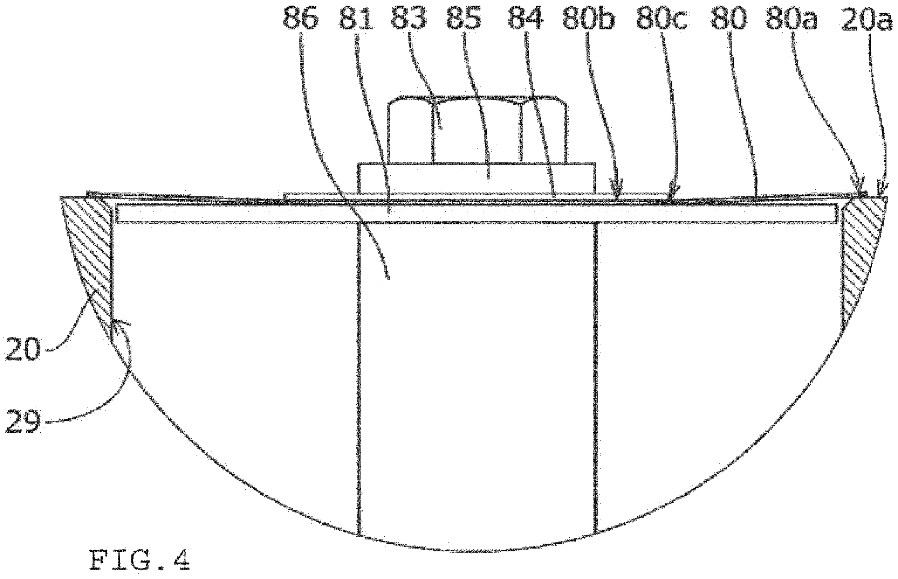

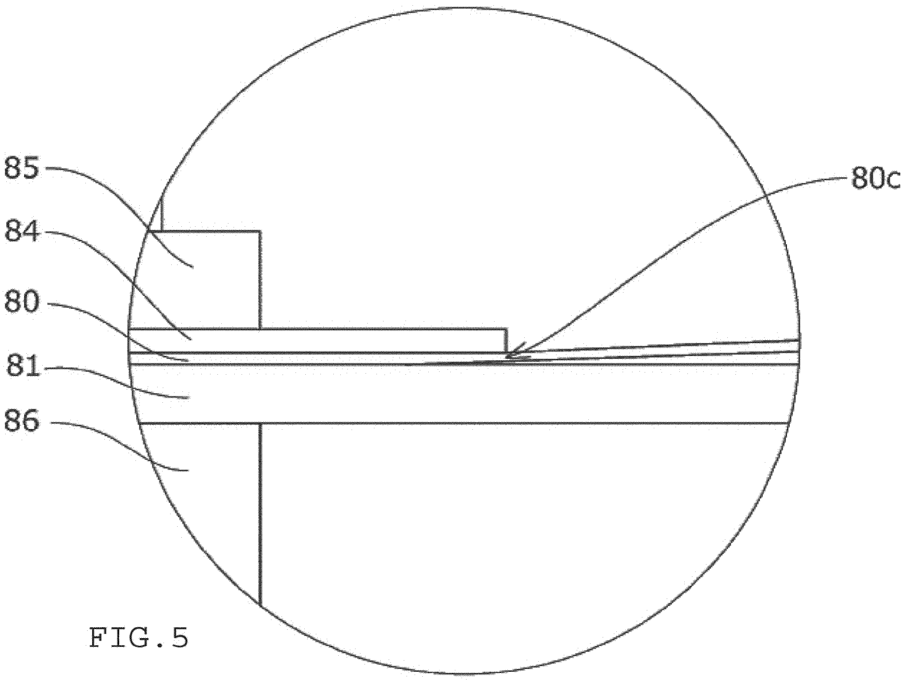

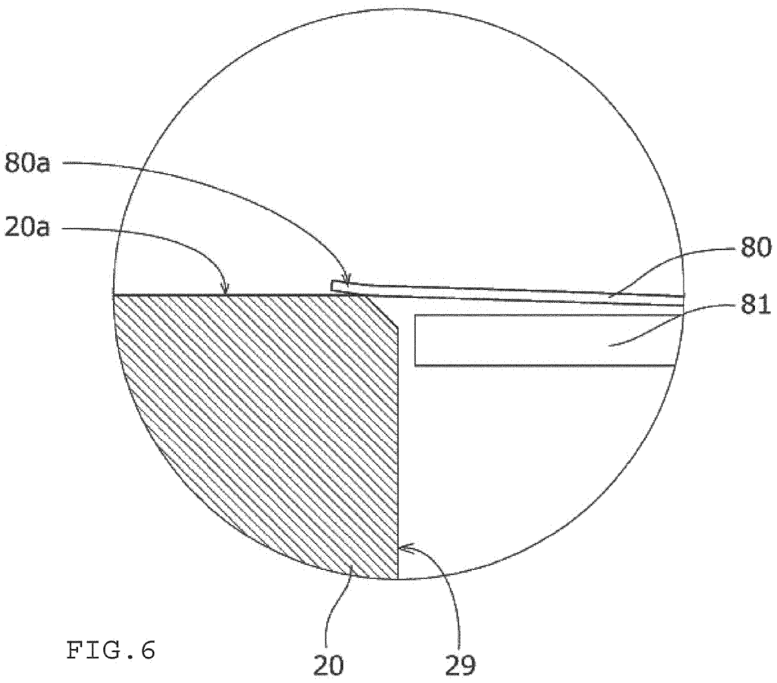

A flexible cover 80 for closing a recessed portion 29 of the rotor 20 is described next with reference to the drawings. FIG. 2 is an enlarged view showing substantial parts of FIG. 1, where (a) is a plan view in which the flexible cover 80 is viewed from the inlet port side and (b) is an enlarged view showing the recessed portion 29 of the rotor 20. FIG. 3 is an assembly drawing of the flexible cover 80. FIG. 4 is an enlarged view showing the flexible cover 80 that elastically deforms to close the recessed portion 29 of the rotor 20. FIG. 5 is an enlarged view of section I shown in FIG. 2. FIG. 6 is an enlarged view of section II shown in FIG. 2.

The flexible cover 80 for covering the recessed portion 29, a first flat cover 81 disposed in contact with the flexible cover 80, and a second flat cover 82 disposed to have a gap with the first flat cover 81, are disposed in the recessed portion 29. The recessed portion 29 is fastened integrally to the rotor shaft 21 by a bolt 83.

The flexible cover 80 is in a thin disc-like shape, made of, for example, stainless steel, and formed into a thickness of approximately 3 mm. An outer diameter of the flexible cover 80 is set to be greater than an inner diameter of the recessed portion 29 of the rotor 20 by approximately 3 mm, and an outer peripheral portion 80a of the flexible cover 80 is in contact with an end surface 20a of the rotor.

The first flat cover 81 and the second flat cover 82 are each in a disc shape, made of, for example, aluminum alloy, and formed into a thickness of approximately 15 mm. A small gap is formed between the first flat cover 81 and the recessed portion 29 and between the second flat cover 82 and the recessed portion 29. Such a gap is formed for the purpose of absorbing the dimensional errors of various members in assembling the vacuum pump 1. The first flat cover 81 and the second flat cover 82 inhibit foreign matter caused by rust on the bolts 25 from flowing back into the chamber.

The flexible cover 80 is sandwiched between the first flat cover 81 and a reinforcing cover 84. The reinforcing cover 84 is in a thin disc-like shape, made of, for example, stainless steel, and formed into a thickness of approximately 0.3 mm. The reinforcing cover 84 is formed to be smaller in diameter than the flexible cover 80. The reinforcing cover 84 may be provided integrally with the flexible cover 80, but providing the flexible cover 80 and the reinforcing cover 84 separately makes it easy to obtain each member. Note that reference numeral 85 represents a collar that is interposed between a head portion of the bolt 83 and the reinforcing cover 84.

A first sleeve 86 is interposed between the first flat cover 81 and the second flat cover 82. The first sleeve 86 is formed in a substantially cylindrical shape, and an upper outer periphery thereof is partially formed to have a small diameter. The first sleeve 86 is made of, for example, aluminum alloy.

The first sleeve 86 has a small diameter portion 86a, a large diameter portion 86b, and a bolt hole 86c through which the bolt 83 is inserted. The small diameter portion 86a is inserted through the bolt holes of the flexible cover 80, the first flat cover 81, the reinforcing cover 84, and the collar 85, and the large diameter portion 86b supports the first flat cover 81. A lower portion of the bolt hole 86c has an enlarged diameter so as to be able to fit to a second sleeve 87, which is described hereinafter.

A step portion 86d of the large diameter portion 86b is disposed lower by approximately 0.5 mm from the end surface 20a of the rotor 20. Therefore, a central portion 80b of the flexible cover 80 is located lower than the outer peripheral portion 80a and elastically deforms downward into a convex shape. Specifically, since the flexible cover 80 is sandwiched between the first flat cover 81 and the reinforcing cover 84, the flexible cover 80 elastically deforms from a supporting point 80c supported by an outer peripheral portion 84a of the reinforcing cover 84 to the outer peripheral portion 80a.

The second sleeve 87 is interposed between the second flat cover 82 and the rotor shaft 21. The second sleeve 87 is formed in a substantially cylindrical shape, and an upper outer periphery thereof is partially formed to have a small diameter. The second sleeve 87 is made of, for example, aluminum alloy.

The second sleeve 87 has a small diameter portion 87a, a large diameter portion 87b, and a bolt hole 87c through which the bolt 83 is inserted. The small diameter portion 87a is inserted through the bolt hole 87c of the second sleeve 87 and a bolt hole of the second flat cover 82, and the large diameter portion 87b supports the second flat cover 82. A lower portion of the bolt hole 87c has an enlarged diameter so as to be able to fit to an upper end of the rotor shaft 21.

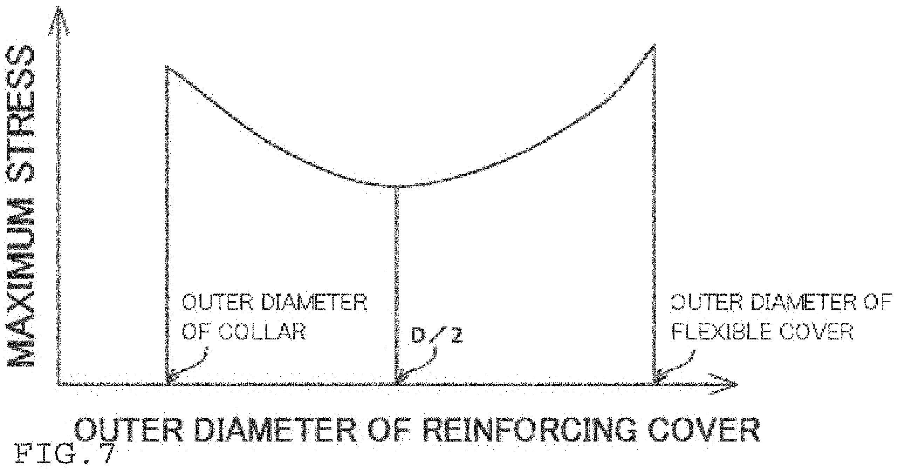

The supporting point 80c approaches the outer peripheral portion 80a as the outer diameter of the reinforcing cover 84 expands, reducing the range in which the flexible cover 80 elastically deforms. As shown in FIG. 7, setting the outer diameter of the reinforcing cover 84 at approximately half a diameter D of the flexible cover 80 makes the maximum stress on the flexible cover 80 minimum. Therefore, using the reinforcing cover 84 causes the maximum stress acting on the flexible cover 80 to gradually decrease as the supporting point 80c approaches a middle section between the center of the flexible cover 80 and the outer peripheral portion 80a. Furthermore, the maximum stress acting on the flexible cover 80 reaches the minimum when the outer diameter of the reinforcing cover 84 is set at half the diameter D of the flexible cover 80 or, in other words, when the supporting point 80c is positioned at the middle section between the center of the flexible cover 80 and the outer peripheral portion 80a.

Note that the flexible cover 80, the first flat cover 81, the second flat cover 82, the bolt 83, the reinforcing cover 84, the collar 85, the first sleeve 86, and the second sleeve 87 are coated for anticorrosion and rust resistance; corrosion and rusting of each member can be prevented.

As described above, in the vacuum pump 1 according to the present embodiment, since the flexible cover 80 covers the recessed portion 29 of the rotor 20, the bolts 13 for fastening the rotor 20 to the rotor shaft 21 are prevented from being exposed to the process gas, preventing corrosion and rusting of the bolts 25 and consequently preventing foreign matter from flowing back into the chamber.

Moreover, the first flat cover 81 supports the flexible cover 80, keeping the central portion 80b of the flexible cover 80 flat, and the flexible cover 80 elastically deforms from the supporting point 80c supported by the outer peripheral portion 84a of the reinforcing cover 84 to the outer peripheral portion 80a, thereby reducing the maximum stress acting on the flexible cover 80. Therefore, not only is it possible to enhance the durability of the flexible cover 80, but also the backward flow of foreign matter into the chamber can be prevented for a long period of time.

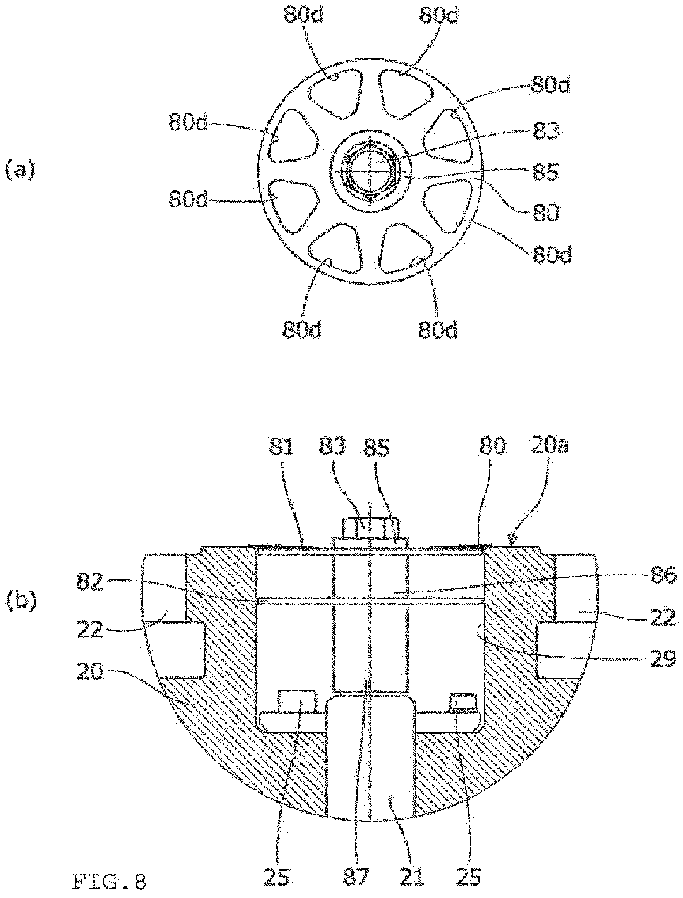

A flexible cover used in the vacuum pump 1 according to a second embodiment of the present invention is described next with reference to the drawings. Note that the same reference numerals are used on the configurations common to the second embodiment and the foregoing first embodiment, to omit the overlapping explanations. FIG. 8 is a diagram showing the flexible cover 80 used in the vacuum pump 1 according to the second embodiment of the present invention, where (a) is a plan view in which the flexible cover is viewed from the inlet port side and (b) is an enlarged view showing the recessed portion of the rotor.

Punched holes 80d functioning as a rigidity lowering portion are disposed between the outer peripheral portion 80a and the central portion 80b of the flexible cover 80. Eight of these punched holes 80d are concentrically arranged on the flexible cover 80 at predetermined intervals. The punched holes 80d are each formed in a fan shape, and outer diameters of the punched holes 80d are set at approximately half the diameter of the flexible cover 80. Because these punched holes 80d are provided, the rigidity of the flexible cover 80 is lowered in a range where the punched holes 80d are placed. Such lowering of the rigidity due to the punched holes 80d allows the flexible cover 80 to deform easily, improving the adhesion between the outer peripheral portion 80a of the flexible cover 80 and the recessed portion 29 of the rotor 20.

Note that the flexible cover 80 is sandwiched between the first flat cover 81 and the collar 85, and the process gas containing foreign matter such as rust and particles passing through the punched holes 80d is blocked by the first flat cover 81, preventing the process gas from entering the recessed portion 29.

The small diameter portion 86a of the first sleeve 86 is inserted through the bolt holds of the flexible cover 80, the first flat cover 81, and the collar 85, and the large diameter portion 86b of the same supports the first flat cover 81. The central portion 80b of the flexible cover 80 is located lower than the outer peripheral portion 80a and elastically deforms downward into a convex shape. Specifically, the flexible cover 80 elastically deforms from the punched holes 80d to the outer peripheral portion 80a.

Note that the shape of the punched holes 80d is not limited to the fan shape and that the number of punched holes 80d to be placed is not limited to eight. In addition, although the rigidity lowering portion can be configured in any ways such as, for example, to partially change the thickens of the flexible cover as long as the rigidity of the flexible cover 80 can locally be lowered, and is not limited to the punched holes 80d; however, the punched holes 80d are preferred in terms of being able to easily form the punched holes 80d by means of press working.

As described above, in the vacuum pump 1 according to the present embodiment, the bolts 25 for tightening the rotor 20 to the rotor shaft 21 are prevented from being exposed to the process gas because the flexible cover 80 covers the recessed portion 29 of the rotor 20, preventing corrosion and rusting of the bolts 25 and consequently preventing foreign matter from flowing back into the chamber.

Moreover, the flexible cover 80 elastically deforms smoothly in such a manner that the section provided with the punched holes 80d curves, preventing an excessive stress from acting on the flexible cover 80. Therefore, not only is it possible to enhance the durability of the flexible cover 80, but also the backward flow of the foreign matter into the chamber can be prevented for a long period of time.

Also, the present invention is applicable to a vacuum pump having a turbomolecular pump and may be applied to a turbomolecular pump or a combination pump.

Note that various modification can be made to the present invention without departing from the scope of the present invention which is solely defined by the appended claims.

- 1: Vacuum pump
- 10: Casing
- 11: Base
- 11A: Base portion
- 11B: Base spacer
- 11a: Gas outlet port
- 11b: Water cooling pipe
- 12: Cylindrical portion
- 12a: Gas inlet port
- 12b: Flange
- 13: Bolt
- 20: Rotor
- 21: Rotor shaft
- 22: Rotor blades
- 23: Touchdown bearing
- 28: Rotor cylindrical portion
- 28a: Outer peripheral surface
- 29: Recessed portion
- 30: Drive motor
- 31: Rotator
- 32: Stationary part
- 40: Stator column
- 50: Magnetic bearing
- 51: Radial electromagnet
- 52: Axial electromagnet
- 60: Stator blades
- 61: Spacer
- 70: Stator
- 70a: Inner peripheral surface (of the stator)
- 71: Thread groove portion
- 80: Flexible cover
- 80a: Outer peripheral portion
- 80b: Central portion
- 80c: Supporting point
- 80d: Punched holes
- 81: First flat cover
- 82: Second flat cover
- 83: Bolt
- 84: Reinforcing cover
- 85: Collar
- 86: First sleeve
- 86a: Small diameter portion (of the first sleeve)
- 86b: Large diameter portion (of the first sleeve)
- 86c: Bolt hole (of the first sleeve)
- 86d: Step portion
- 87: Second sleeve
- 87a: Small diameter portion (of the second sleeve)
- 87b: Large diameter portion (of the second sleeve)
- 87c: Bolt hole (of the second sleeve)
- A: Rotor axial direction
- R: Rotor radial direction
- PA: Turbomolecular pump mechanism
- PB: Thread groove pump mechanism

## Claims

1. A vacuum pump (1), comprising: a casing (10) that has an inlet port (12a) and an outlet port (11a); and a rotor (20) that has a recessed portion (29) opened toward the inlet port and is fastened to a rotor shaft (21) by a bolt (25) disposed in the recessed portion, **characterized in that**
the vacuum pump further comprising a flexible cover (80) that has an outer peripheral portion (80a) supported on an end surface of the rotor that opposes the inlet port, and a central portion (80b) caved in the recessed portion of the rotor, the flexible cover covering the recessed portion by elastically deforming into a convex shape toward the recessed portion.

2. The vacuum pump according to claim 1, further comprising a reinforcing cover (84) that is disposed on the flexible cover to support the flexible cover that elastically deforms.

3. The vacuum pump according to claim 2, wherein the reinforcing cover has an outer diameter smaller than an outer diameter of the flexible cover.

4. The vacuum pump according to any one of claims 1 to 3, further comprising a flat cover (81) that is disposed adjacent to the flexible cover on the side opposite to the inlet port across the flexible cover, and that supports the flexible cover.

5. The vacuum pump according to claim 1, wherein the flexible cover has a rigidity lowering portion (80d) for locally lowering a rigidity of the flexible cover.

6. The vacuum pump according to claim 5, wherein
the rigidity lowering portion is formed of a plurality of punched holes (80d) that are formed concentrically" around the central portion of the flexible cover, and the vacuum pump further comprises a flat cover (81) "that is disposed adjacent to the flexible cover on the side opposite to the inlet port across the flexible cover, and that is inserted into the recessed portion of the rotor.

## Patentansprüche

1. Vakuumpumpe (1) mit: einem Gehäuse (10), das eine Einlassöffnung (12a) und eine Auslassöffnung (11a) aufweist; und einem Rotor (20), der einen ausgesparten Teil (29) hat, der zu der Einlassöffnung hin offen und an einer Rotorwelle (21) mittels einer Schraube (25) befestigt ist, die in dem ausgesparten Teil angeordnet ist, **dadurch gekennzeichnet, dass**
die Vakuumpumpe weiter eine flexible Abdeckung (80) aufweist, die einen äußeren peripheren Teil (80a), der auf einer Endfläche des Rotors abgestützt ist, die der Einlassöffnung gegenüberliegt, und einen zentralen Teil (80b) aufweist, der in dem ausgesparten Teil des Rotors eingesetzt ist, wobei die flexible Abdeckung den ausgesparten Teil durch elastische Verformung in eine konvexe Form zu dem ausgesparten Teil hin abdeckt.

2. Vakuumpumpe nach Anspruch 1, die weiter eine verstärkende Abdeckung (84) aufweist, die auf der flexiblen Abdeckung angeordnet ist, um die flexible Abdeckung, die sich elastisch verformt, abzustützen.

3. Vakuumpumpe nach Anspruch 2, wobei die verstärkende Abdeckung einen Außendurchmesser hat, der kleiner als ein Außendurchmesser der flexiblen Abdeckung ist.

4. Vakuumpumpe nach einem der Ansprüche 1 bis 3, die weiter einen flachen Deckel (81) hat, der angrenzend an die flexible Abdeckung auf der Seite gegenüber der Einlassöffnung über der flexiblen Abdeckung angeordnet ist, und welcher die flexible Abdeckung abstützt.

5. Vakuumpumpe nach Anspruch 1, wobei die flexible Abdeckung einen steifigkeitsverringernden Teil (80d) zur örtlichen Verringerung einer Steifigkeit der flexiblen Abdeckung aufweist.

6. Vakuumpumpe nach Anspruch 5, wobei der steifigkeitsverringernde Teil aus einer Mehrzahl gestanzter Öffnungen (80d) gebildet ist, die konzentrisch um den zentralen Teil der flexiblen Abdeckung herum angeordnet sind, und die Vakuumpumpe weiter einen flachen Deckel (81) aufweist, der angrenzend an die flexible Abdeckung auf der Seite gegenüber der Einlassöffnung über der flexiblen Abdeckung angeordnet ist, und der in den ausgesparten Teil des Rotors eingesetzt ist.

## Revendications

1. Pompe à vide (1) comprenant : un carter (10) qui présente un orifice d'entrée (12a) et un orifice de sortie (11a) ; et un rotor (20) qui présente une portion évidée (29) ouverte vers l'orifice d'entrée et est fixé à un arbre de rotor (21) par un boulon (25) disposé dans la portion évidée, **caractérisée en ce que**
la pompe à vide comprend en outre un couvercle flexible (80) qui présente une portion périphérique extérieure (80a) supportée sur une surface d'extrémité du rotor qui s'oppose à l'orifice d'entrée, et une portion centrale (80b) enfoncée dans la portion évidée du rotor, le couvercle flexible couvrant la portion évidée par déformation élastique dans une forme convexe vers la portion évidée.

2. Pompe à vide selon la revendication 1, comprenant en outre un couvercle de renforcement (84) qui est disposé sur le couvercle flexible pour supporter le couvercle flexible qui se déforme élastiquement.

3. Pompe à vide selon la revendication 2, dans laquelle le couvercle de renforcement présente un diamètre extérieur inférieur à un diamètre extérieur du couvercle flexible.

4. Pompe à vide selon l'une quelconque des revendications 1 à 3, comprenant en outre un couvercle plat (81) qui est disposé de manière adjacente au couvercle flexible sur le côté opposé à l'orifice d'entrée sur le couvercle flexible, et qui supporte le couvercle flexible.

5. Pompe à vide selon la revendication 1, dans laquelle le couvercle flexible présente une portion d'abaissement de rigidité (80d) pour l'abaissement local d'une rigidité du couvercle flexible.

6. Pompe à vide selon la revendication 5, dans laquelle la portion d'abaissement de rigidité est formée d'une pluralité de trous poinçonnés (80d) qui sont formés concentriquement autour de la portion centrale du couvercle flexible, et la pompe à vide comprend en outre un couvercle plat (81) qui est disposé de manière adjacente au couvercle flexible sur le côté opposé à l'orifice d'entrée sur le couvercle flexible, et qui est inséré dans la portion évidée du rotor.
